# EUROPÄISCHE PATENTSCHRIFT

(11) **EP 2 693 363 B1**
(45) Veröffentlichungstag und Bekanntmachung des Hinweises auf die Patenterteilung: **22.07.2015**
(21) Anmeldenummer: 12178684.2
(22) Anmeldetag: 31.07.2012
(51) Int. Cl.: G06K 7/10, B07C 3/14, G06K 9/32

(54) **Kamerasystem und Verfahren zur Erfassung eines Stromes von Objekten**
Camera system and method for recording a flow of objects
Système de caméra et procédé de détermination d'un flux d'objets

(43) Veröffentlichungstag der Anmeldung: 05.02.2014
(73) Patentinhaber: SICK AG, 79183 Waldkirch (DE)
(72) Erfinder: Gehring, Roland, 79215 Elzach (DE); Reichenbach, Jürgen, 79312 Emmendingen (DE)
(74) Vertreter: Ludewigt, Christoph

(56) Entgegenhaltungen:
- EP-A1- 2 133 816

## Beschreibung

Die Erfindung bezieht sich auf ein Kamerasystem und ein Verfahren zur Erfassung eines Stromes von Objekten mit mehreren Erfassungseinheiten zur Aufnahme von Bilddaten der Objekte nach dem Oberbegriff von Anspruch 1 beziehungsweise 12.

Zur Automatisierung von Vorgängen an einem Förderband werden Sensoren eingesetzt, um Objekteigenschaften der geförderten Objekte zu erfassen und in Abhängigkeit davon weitere Bearbeitungsschritte einzuleiten. In der Logistik-Automation besteht die Bearbeitung typischerweise in einer Sortierung. Neben allgemeinen Informationen, wie Volumen und Gewicht der Objekte, dient als wichtigste Informationsquelle häufig ein an dem Objekt angebrachter optischer Code.

Die verbreitetsten Codeleser sind Barcodescanner, welche einen Barcode oder Strichcode mit einem Laserlesestrahl quer zum Code abtasten. Sie werden an Supermarktkassen, zur automatischen Paketidentifikation, Sortierung von Postsendungen oder bei der Gepäckabfertigung in Flughäfen und in anderen Logistikanwendungen häufig eingesetzt. Mit der Weiterentwicklung der digitalen Kameratechnologie werden Barcodescanner zunehmend durch kamerabasierte Codeleser abgelöst. Statt Codebereiche abzuscannen, nimmt ein kamerabasierter Codeleser mit Hilfe eines pixelaufgelösten Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. In einer wichtigen Anwendungsgruppe werden die Code tragenden Objekte an dem Codeleser vorbei gefördert. Eine Kamera, häufig eine Kamerazeile, liest die Objektbilder mit den Codeinformationen sukzessive mit der Relativbewegung ein.

Ein einzelner Sensor reicht oft nicht aus, um sämtliche relevanten Informationen über die Objekte auf einem Förderband aufzunehmen. Deshalb werden mehrere Sensoren in einem Lesesystem oder Lesetunnel zusammengefasst. Liegen zur Erhöhung des Objektdurchsatzes mehrere Förderbänder nebeneinander, oder wird ein verbreitertes Förderband verwendet, so ergänzen sich mehrere Sensoren in ihren an sich zu schmalen Sichtfeldern gegenseitig, um die gesamte Breite abzudecken. Außerdem werden Sensoren in unterschiedlichen Positionen montiert, um Codes von allen Seiten aufzunehmen (Omni-Lesung).

Das Lesesystem stellt die erfassten Informationen, wie Codeinhalte und Bilder der Objekte, einer übergeordneten Steuerung zur Verfügung. Diese Bilder werden beispielsweise für eine externe Texterkennung, eine Visualisierung oder eine manuelle Nachberabeitung (Video Coding) genutzt. Unabhängig von der genauen Weiterverarbeitung sollten die Bilder dafür scharf sein, d. h. die Kameras der Codeleser sollten während der Bildaufnahme auf das jeweilige Objekt fokussiert sein. Das gilt ganz entsprechend auch für eine interne Verwendung von Bildern innerhalb des Lesesystems, etwa beim Decodieren von Codeinhalten. Es ist bekannt, hierfür eine variable Fokuseinstellung in der Kamera entsprechend dem Objektabstand nachzuführen.

Befinden sich nun mehrere Objekte gleichzeitig im Lesebereich, die eine unterschiedliche Fokuseinstellung benötigen, so kann eine Kamera nur auf eine der Fokuslagen eingestellt werden. Für Objekte außerhalb des begrenzten Schärfentiefenbereichs entstehen somit Bilder minderer Qualität, und es kann zu Fehllesungen (no read) von Codes kommen. Diese Situation tritt bei breiteren Förderbändern oder mehreren nebeneinander angeordneten Förderbändern besonders häufig ein.

Die EP 1 645 839 B1 offenbart eine Vorrichtung zur Überwachung von bewegten Objekten an einem Förderband, die einen vorgeordneten entfernungsmessenden Laserscanner zur Erfassung der Geometrie der Objekte auf dem Förderband und eine Zeilenkamera aufweist. Aufgrund der Daten des Laserscanners werden Objektbereiche als interessierende Bereiche (ROI, region of interest) erkannt, und die Auswertung der Bilddaten der Zeilenkamera wird auf diese interessierenden Bereiche beschränkt. Ein Kriterium für die Auswahl von interessierenden Bereichen ist, ob sich die aufgenommenen Objektflächen in einem Schärfentiefebereich der Zeilenkamera befinden. Somit sind zwar die nur unscharf aufgenommenen Objekte als solche identifiziert, behebbar wird dieser Mangel dadurch aber nicht.

Aus der DE 102 07 538 A1 ist ein optoelektronischer Codeleser bekannt, bei dem eine erste Abtasteinrichtung und eine zweite Abtasteinrichtung vorgesehen sind, die zum Abtasten entlang der Abtastrichtung in unterschiedlichen Fokuslagen gesteuert werden. Wird eine Mindestanzahl von Codes im Lesebereich erkannt, beispielsweise zwei Codes, so werden die beiden Abtasteinrichtungen zu einer kooperativen Fokussierung veranlasst. Dabei fokussiert jede Abtasteinrichtung jeweils auf einen Code und nach erfolgreichem Einlesen auf den nächsten von der anderen Abtasteinrichtung noch nicht erfassten Code. Dies erfordert also eine direkte oder über die gemeinsame Steuerung vermittelte Absprache zwischen den Abtasteinrichtungen. Außerdem ist in der DE 102 07 538 A1 nicht vorgesehen, die aufgenommenen Bilddaten in einem anderen Zusammenhang als der unmittelbar ausgeführten internen Decodierung zu bearbeiten oder auszugeben. Es wird zudem stets davon ausgegangen, dass eine Bildzeile den Codeinhalt bereits repräsentiert. Ein Zusammenfügen von Bilddaten, die zu unterschiedlichen Zeitpunkten oder von unterschiedlichen Sensoren aufgenommen wurden, ist deshalb nicht vorgesehen und nicht notwendig.

Die WO 03/044586 A1 offenbart ein Verfahren zu perspektivischen Entzerrung von Bildern eines Objekts auf einem Förderer, die mit einem Zeilenbildsensor aufgenommen sind. Dazu werden die Bildzeilen-Hälften mittels Bildverarbeitung auf eine gemeinsame Bildauflösung reskaliert, wobei jede Bildzeile in zwei Hälften bearbeitet wird. Dieses Verfahren befasst sich mit einer nachgelagerten Softwareverarbeitung der Bilddaten. Die Rohdaten werden zuvor mit Hilfe einer Autofokuseinheit aufgenommen. Das Problem einer gleichzeitigen Erfassung mehrerer Objekte mit untereinander unverträglichen Fokusanforderungen wird in WO 03/044586 A1 nicht diskutiert.

Die EP 1 363 228 B1 beschreibt einen Codeleser mit integrierter Abstandsbestimmung, der für die Bestimmung von Codepositionen zur Zuordnung von Codes zu Objekten ausgebildet ist. In einer Ausführungsform liegen dabei mehrere Objekte nebeneinander auf einem Förderband. Auf die Notwendigkeit einer unterschiedlichen Fokussierung für diese Objekte geht die EP 1 363 228 B1 aber nicht ein.

Es ist daher Aufgabe der Erfindung, die gleichzeitige Erfassung mehrerer Objekte eines Objektstroms zu verbessern.

Diese Aufgabe wird durch ein Kamerasystem und ein Verfahren zur Erfassung eines Stromes von Objekten mit mehreren Erfassungseinheiten zur Aufnahme von Bilddaten der Objekte nach Anspruch 1 beziehungsweise 12 gelöst. Dabei geht die Erfindung von dem Grundgedanken aus, mehrere Erfassungseinheiten mit jeweils einem Bildsensor und einer Fokussierungseinheit zu verwenden und die Fokuslagen komplementär einzustellen, um bei gleichzeitiger Erfassung mehrerer Objekte von möglichst vielen Objekten scharfe Bilddaten aufzunehmen. Um diese Bilddaten auch komplexeren Auswertungen zu unterziehen als einer reinen Decodierung auf Basis einer einzelnen Bildzeile einer einzelnen Erfassungseinheit, werden die Bilddaten zu einem gemeinsamen Bild zusammengesetzt. Dieses Zusammensetzen kann zwei Komponenten umfassen: zum einen in einer Querrichtung, indem jeweils die scharf erfassten Teile von Bildzeilen der unterschiedlichen Erfassungseinheiten zu einer gemeinsamen Bildzeile zusammengefügt werden, zum anderen in einer Längsrichtung, wobei gemeinsame Bildzeilen zu einem gemeinsamen Bild aneinander gereiht werden. Für diese Vorgänge werden die Rohbilddaten vorzugsweise in ein gemeinsames Koordinatensystem umgerechnet. Dazu wiederum sollten Position und Orientierung der Erfassungseinheiten bekannt sein (Registrierung), wobei dies durch Montagevorgaben oder durch Kalibrierung erfolgen kann.

Die Erfindung hat den Vorteil, dass auch für gleichzeitig erfasste Objekte die Fokuslage individuell nachgeführt wird. Dies führt zu scharfen Bildern der Objekte und damit besseren Ergebnissen in nachgelagerten Prozessen, an welche das gemeinsame Bild ausgegeben wird.

Das Zusammensetzen und Ausgeben von gemeinsamen Bildern kann auf interessierende Bereiche beschränkt bleiben, um die Datenmenge zu reduzieren. Beispielsweise sind Bereiche zwischen zwei Objekten in aller Regel ohne relevante Information. Speziell für Codelesen oder Texterkennung (OCR, optical code reading) sind auch große Teile der Objektoberflächen uninteressant, die keine Codes tragen.

Das Kamerasystem ist vorzugsweise als kamerabasiertes Codelesesystem ausgebildet. Eine Decodiereinheit liest den Codeinhalt aus den durch die individuelle Fokussierung scharf aufgenommenen Bilddaten aus. Dadurch ergibt sich eine höhere Leserate, denn es können auch Codes von mehreren Objekten mit unterschiedlichen Fokussierungsanforderungen gleichzeitig gelesen werden.

Die Erfassungseinheiten sind bevorzugt derart nebeneinander angeordnet, dass ihre Erfassungsbereiche mindestens teilweise überlappen und zusammen die Breite des Stromes von Objekten abdecken. Bei zeilenförmigen Erfassungsbereichen entsteht also effektiv aus mehreren nebeneinander liegenden Bildzeilen eine gemeinsame Bildzeile. In den Überlappungsbereichen werden beim Zusammenfügen des gemeinsamen Bildes die Bilddaten der im jeweiligen Bereich richtig fokussierten Erfassungseinheit verwendet. Derartige Überlappungsbereiche können absichtlich sehr groß gewählt werden, bis hin zu dem Extremfall vollständiger Überlappung. Dadurch entsteht nämlich eine größere Wahlfreiheit, welche Erfassungseinheit sich in ihrem Fokus auf welches der redundant erfassten Objekte einstellt. Außerhalb der Überlappungsbereiche, wo nur eine Erfassungseinheit Bilddaten aufnimmt, muss diese zwangsläufig auf ein dort vorhandenes Objekt fokussieren und kann sich nicht von einer anderen Erfassungseinheit aushelfen lassen.

Die Auswertungseinheit ist bevorzugt dafür ausgebildet, aus den Bilddaten jeweils ein Bild pro Objekt und/oder pro einem an einem Objekt (14) angeordneten Code (16) zu erzeugen. Dieses Bild kann vollständig im fokussierten Erfassungsbereich einer einzigen Erfassungseinheit liegen, aber auch aus Bilddaten mehrerer Erfassungseinheiten zusammengesetzt sein. Außerdem wird der Bildbereich auf das Objekt beziehungsweise den Code und gegebenenfalls eine Toleranzumgebung begrenzt. Nachgelagerte Bearbeitungsschritte haben dann Zugriff auf jeweils ein scharfes Bild je Objekt oder Codebereich.

Die Erfassungseinheiten sind bevorzugt separate Kameras. Dadurch können die Erfassungseinheiten mit flexiblen Positionen und insbesondere Abständen zueinander montiert werden, um eine Anpassung an den Objektstrom vorzunehmen.

In einer alternativen bevorzugten Ausführungsform sind mehrere Erfassungseinheiten in einer Kamera zusammengefasst. Dadurch erhält man ein kompakteres Kamerasystem, welches alle Erfassungseinheiten umfasst, oder mehrere Teilsysteme mit jeweils einigen der Erfassungseinheiten, verliert aber gegenüber einzelnen Erfassungseinheiten an Flexibilität.

Das Kamerasystem weist bevorzugt mindestens einen Geometrieerfassungssensor auf, um vorab eine Kontur des Stromes von Objekten zu erfassen. Dabei handelt es sich beispielsweise um einen entfernungsmessenden Laserscanner. Dadurch sind die Objekte mit ihrer Position und ihren Abmessungen vorab bekannt. Es bleibt damit genug Zeit, vorab zu entscheiden, welche Erfassungseinheit für welches Objekt zuständig ist, und um die erforderliche Umfokussierung rechtzeitig vorzunehmen.

Die Auswertungseinheit ist bevorzugt dafür ausgebildet, Bildzeilen zunächst anhand der Objektgeometrie oder der eingestellten Fokuslage auf eine vorgebbare Auflösung umzurechnen und erst dann zu einem gemeinsamen Bild zusammenzusetzen. Im Gegensatz zu der durch die Hardware bestimmten Auflösung des Bildsensors selbst, bezieht sich die vorgebbare Auflösung auf das Objekt, also eine Pixelzahl pro Objektabmessung oder -struktur. Letztere Auflösung ändert sich ohne eine Umrechnung mit der Perspektive, hängt also zunächst von der Perspektive und der Objektgeometrie, insbesondere der Objekthöhe oder der Codeposition ab. Die Objektgeometrie wurde bereits berücksichtigt, um die erforderliche Fokuslage zu bestimmen, so dass auch diese Fokuslage einen geeigneten Maßstab für die Umrechnung darstellt. Um von den perspektivischen Auflösungsunterschieden unabhängig zu werden, wird eine Auflösung fest vorgegeben, und die aufgenommenen Bilddaten werden darauf reskaliert. Die Umrechnung stellt also eine Art digitalen Zoom dar, der im Gegensatz zu einem echten Zoom nicht durch Veränderung des Objektivs, sondern durch nachträgliche Bearbeitung der Bilddaten realisiert ist.

Die vorgebbare Auflösung ist vorzugsweise für Bilddaten aller Erfassungseinheiten die gleiche. Somit entstehen Bilder untereinander gleicher Auflösung der Objektstrukturen, wodurch ein Zusammenfügen (Stiching) erheblich vereinfacht und verbessert wird. Damit das stets möglich ist, wird als Auflösung insbesondere eine schlechteste denkbare Auflösung vorgegeben, also beispielsweise die fiktive Auflösung des Bodens oder eines Förderbandes, auf dem sich die Objekte befinden. Der digitale Zoom wird somit abhängig von der Fokuslage nachgeführt, damit im Ergebnis die Bildauflösung mit einem vorgegebene Auflösungswert konstant und somit von der Fokuslage und von der Erfassungseinheit unabhängig wird, welche die Bilddaten liefert.

Den Erfassungseinheiten sind bevorzugt eigene Steuerungseinheiten zugeordnet, welche jeweils für eine autonome Fokusstrategie für die Einstellung der Fokuslage ausgebildet sind, wobei die Fokusstrategien untereinander komplementär sind. Hierbei hat jede Erfassungseinheit eine interne Fokussierstrategie und entscheidet individuell für sich, auf welches Objekt sie fokussiert. Zugleich sind aber die Fokusstrategien per Parametrierung oder anfängliche Absprache gerade entgegengesetzt gewählt. Sofern mehrere Objekte gleichzeitig erfasst werden, ist damit sichergestellt, dass nicht mehrere Erfassungseinheiten auf das gleiche Objekt fokussieren. Am besten geeignet für solche komplementären Strategien ist ein Kamerasystem mit zwei Erfassungseinheiten, weil sich dann die Gegensätze besonders deutlich definieren lassen, aber es ist auch denkbar für mehrere Erfassungseinheiten mit abgestuften Fokussierstrategien. Die Komplementarität kann sich erst im Zusammenhang mit der Anordnung der Erfassungseinheit ergeben. Beispielsweise können zwei Erfassungseinheiten die zunächst gleiche Strategie verfolgen, jeweils auf das nächstgelegene Objekt zu fokussieren, wobei sich erst durch die Anordnung der Erfassungseinheiten untereinander ergibt, dass diese Objekte nicht die gleichen sind.

Die komplementären Fokusstrategien sind bevorzugt anhand mindestens einem der folgenden Kriterien definiert: zugewiesene Objektnummer, Höhe des Objekts, Abstand zwischen Objekt oder Code und Erfassungseinheit, notwendige Fokusverstellung gegenüber einer Fokusvoreinstellung und/oder Abstand zwischen optischer Achse und Objekt oder Code. Die Objektnummer wird den Objekten beispielsweise anhand zuvor erfasster Geometrieinformationen oder der Reihenfolge in dem Strom von Objekten zugewiesen. Eine Auswahl gemäß der Höhe des Objekts und des Abstandes zwischen Objekt und Erfassungseinheit führt oft zum gleichen Ergebnis. Dies ist aber wegen der lateralen Komponente, die nur im letzteren Fall berücksichtigt ist, nicht immer der Fall. Außerdem kann der Abstand auf den Code anstelle des Objekts bezogen sein. Die erforderliche Fokuseinstellung wird gegen eine Fokusvoreinstellung als Referenz verglichen, beispielsweise mit einem Tiefenschärfebereich in mittlerer Lesehöhe. Die tatsächlich erforderliche Umfokussierung kann abweichen, wenn zwischen zwei Objekten keine Ruhestellung eingenommen wurde. Das ist aber kein geeignetes Kriterium für eine autonome Fokusstrategie, da hierfür die Fokuslage der einen Erfassungseinheit den anderen Erfassungseinheiten bekannt sein müsste.

Den Erfassungseinheiten ist bevorzugt eine gemeinsame Steuerungseinheit zugeordnet, welche den Erfassungseinheiten jeweils eine Fokuslage zuweist. Dies ist also die Alternative einer externen Fokuspriorisierung. Beispielsweise anhand einer Fokusliste werden zu erfassende Objekte oder einzustellende Fokuslagen jeweils zentral den Erfassungseinheiten zugewiesen. Dies erfordert mehr Rechen- und Kommunikationsaufwand, führt aber unter Umständen wegen der größeren Übersicht und den daraus resultierenden Optimierungsmöglichkeiten in der gemeinsamen Steuerungseinheit dazu, dass eine Konfliktsituation vermieden wird. Beispielsweise kann die gemeinsame Steuerungseinheit dafür sorgen, dass dann, wenn für ein zusätzliches Objekt keine freie Erfassungseinheit verfügbar ist, die auf dieses Objekt fokussiert werden könnte, zumindest einer benachbarten Erfassungseinheit ein Objekt zugewiesen ist, welches eine ähnliche Fokuslage erfordert und damit das zusätzliche Objekt noch einigermaßen scharf erfasst.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Draufsicht auf ein Kamerasystem an einem Förderband mit zu erfassenden Objekten;
- Fig. 2: eine Schnittansicht durch die Ansicht gemäß Figur 1 in einer Erfassungsebene des Kamerasystems;
- Fig. 3a: eine sehr vereinfachte Blockdarstellung einer Ausführungsform eines Kamerasystems mit dezentraler kooperativer Fokusnachführung:
- Fig. 3b: eine sehr vereinfachte Blockdarstellung einer Ausführungsform eines Kamerasystems mit zentraler kooperativer Fokusnachführung;
- Fig. 4a: eine Schnittdarstellung eines Kamerasystems über zwei Objekten zur Erläuterung einer Fokussierstrategie anhand der Objekthöhe;
- Fig. 4b: eine Schnittdarstellung eines Kamerasystems über zwei Objekten zur Erläuterung einer Fokussierstrategie anhand eines Abstands zwischen Objekt oder Code und Erfassungseinheit;
- Fig. 4c: eine Schnittdarstellung eines Kamerasystems über zwei Objekten zur Erläuterung einer Fokussierstrategie anhand eines Abstands zwischen optischer Achse der Erfassungseinheit und Objekt oder Code;
- Fig. 5a: eine schematische Draufsicht auf zwei Objekte auf einem Förderband mit einer Lage von zu verschiedenen Zeitpunkten nacheinander aufgenommenen Bildzeilen; und
- Fig. 5b: eine aus den Zeitpunkten gemäß Figur 5a abgeleitete Fokustabelle.

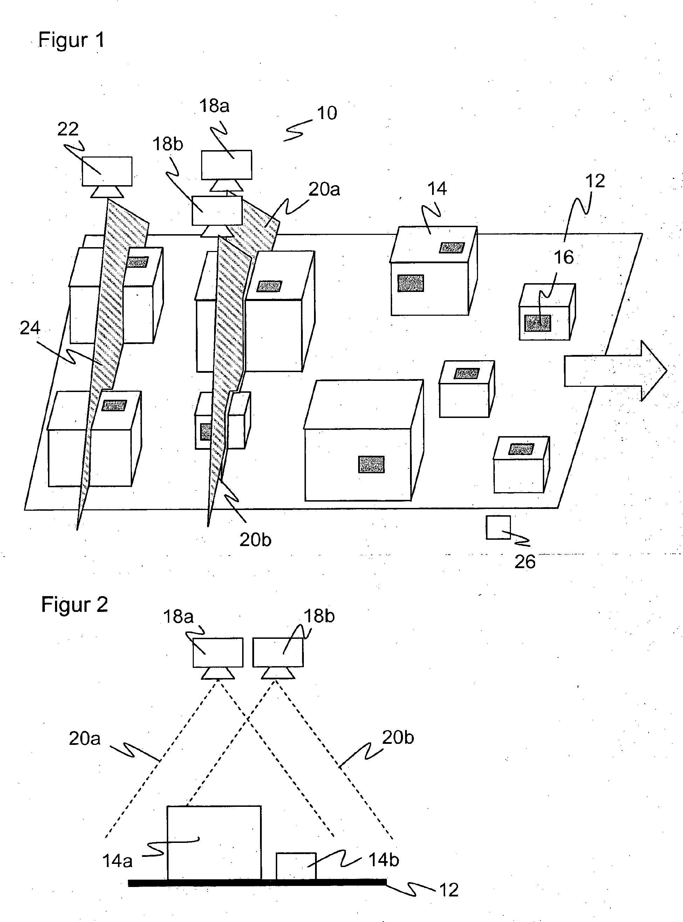

Figur 1 zeigte eine schematische dreidimensionale Draufsicht auf ein Kamerasystem 10 an einem Förderband 12 mit zu erfassenden Objekten 14, auf denen Codes 16 angebracht sind. Das Förderband 12 ist ein Beispiel für die Erzeugung eines Stromes von Objekten 14, die sich relativ zu dem stationären Kamerasystem 10 bewegen. Alternativ kann das Kamerasystem 10 bewegt werden, oder die Objekte 14 bewegen sich bei stationärer Montage des Kamerasystems 10 durch ein anderes Mittel oder durch Eigenbewegung.

Das Kamerasystem 10 umfasst zwei kamerabasierte Codeleser 18a-b. Sie weisen jeweils einen nicht dargestellten Bildsensor mit einer Vielzahl von zu einer Pixelzeile oder einer Pixelmatrix angeordneten Lichtempfangselementen sowie ein Objektiv auf. Die Codeleser 18a-b sind somit Kameras, welche zusätzlich mit einer Decodiereinheit zum Auslesen von Codeinformationen und entsprechende Vorverarbeitungen zum Auffinden und Aufbereiten von Codebereichen ausgestattet sind. Es ist auch denkbar, Ströme von Objekten 14 ohne Codes 16 zu erfassen und dementsprechend auf die Decodiereinheit selbst oder auf deren Verwendung zu verzichten. Die Codeleser 18a-b können sowohl separate Kameras als auch Erfassungseinheiten innerhalb der gleichen Kamera sein.

In dem Beispiel der Figur 1 sind die Erfassungsbereiche 20a-b der Codeleser 18a-b Winkelausschnitte einer Ebene. Zu einem Zeitpunkt wird demnach eine Bildzeile der Objekte 14 auf dem Förderband 12 erfasst, und während der Bewegung des Förderbandes werden sukzessive Bildzeilen aneinandergereiht, um ein Gesamtbild zu erhalten. Wenn abweichend die Bildsensoren der Codeleser 18a-b Matrixsensoren sind, kann das Bild wahlweise aus flächigen Abschnitten oder ausgewählten Zeilen der Matrix zusammengesetzt werden, oder es werden Schnappschüsse aufgenommen und einzeln ausgewertet.

Die Erfassungsbereiche 20a-b überlappen in Querrichtung des Förderbandes 12 weitgehend. In anderen Ausführungsformen ist eine geringere, aber auch eine größere Überlappung bis hin zu vollständiger Übereinstimmung denkbar. Auch können zusätzliche Codeleser eingesetzt werden, deren Erfassungsbereiche dann paarweise oder in größeren Gruppen überlappen. In den Überlappungsbereichen stehen die Bilddaten redundant zur Verfügung. Dies kann genutzt werden, um gemeinsame Bildzeilen zusammenzusetzen, in denen die jeweils schärferen Bilddaten jedes Pixels oder Abschnitts verwendet werden.

Bezüglich der Bewegungsrichtung des Förderbandes 12 oberhalb der Codeleser 18a-b ist ein Geometrieerfassungssensor 22 beispielsweise in Form eines an sich bekannten entfernungsmessenden Laserscanners angeordnet, der mit seinem Erfassungsbereich das gesamte Förderband 12 überdeckt. Der Geometrieerfassungssensor 22 vermisst die dreidimensionale Kontur der Objekte 14 auf dem Förderband 12, so dass das Kamerasystem 10 schon vor dem Erfassungsvorgang der Codeleser 18a-b die Anzahl der Objekte 14 sowie deren Positionen und Formen beziehungsweise Abmessungen kennt. Ein Laserscanner hat einen sehr großen Sichtwinkel, so dass auch breite Förderbänder 12 erfassbar sind. Dennoch können In einer anderen Ausführungsform zusätzliche Geometriesensoren nebeneinander angeordnet werden, um Abschattungseffekte durch unterschiedliche Objekthöhen zu reduzieren.

An dem Förderband 12 ist weiterhin ein Encoder 26 zur Bestimmung des Vorschubs beziehungsweise der Geschwindigkeit vorgesehen. Alternativ bewegt sich das Förderband zuverlässig mit einem bekannten Bewegungsprofil, oder entsprechende Informationen werden dem Kamerasystem von einer übergeordneten Steuerung übergeben. Der jeweilige Vorschub des Förderbandes 12 wird benötigt, um die scheibenweise vermessenen Geometrien mit korrektem Maß zu einer dreidimensionalen Kontur und die Bildzeilen zu einem Gesamtbild zusammenzusetzen, und damit während der Erfassung sowie bis zur Ausgabe der erfassten Objekt- und Codeinformationen unterhalb der Erfassungsposition die Zuordnungen trotz der ständigen Bewegung des Förderbandes 12 erhalten bleiben. Die Objekte 14 werden dazu anhand des Vorschubs von der ersten Erfassung an verfolgt (Tracking). Wie einleitend beschrieben, können weitere, nicht dargestellte Sensoren aus anderer Perspektive angebracht werden, um Geometrien oder Codes von der Seite oder von unten zu erfassen.

Figur 2 zeigt eine Schnittansicht durch die Ebene der Erfassungsbereiche 20a-b der Figur 1. Dabei bezeichnen hier und im Folgenden gleiche Bezugszeichen die gleichen oder einander entsprechende Merkmale. Die beiden Objekte 14a-b haben eine deutlich unterschiedliche Höhe. Fokussiert beispielsweise der Codeleser 18a auf die Oberseite des Objekts 14a, so liegt Objekt 14b außerhalb des Schärfentiefebereichs, und der Codeleser 18a nimmt keine scharfen Bilddaten von Objekt 14b auf. Deshalb arbeiten die beiden Codeleser 18a-b mit einer kooperativen Fokussierung. In dem genannten Beispiel muss dafür gesorgt werden, dass der Codeleser 18b auf das flache Objekt 14b fokussiert.

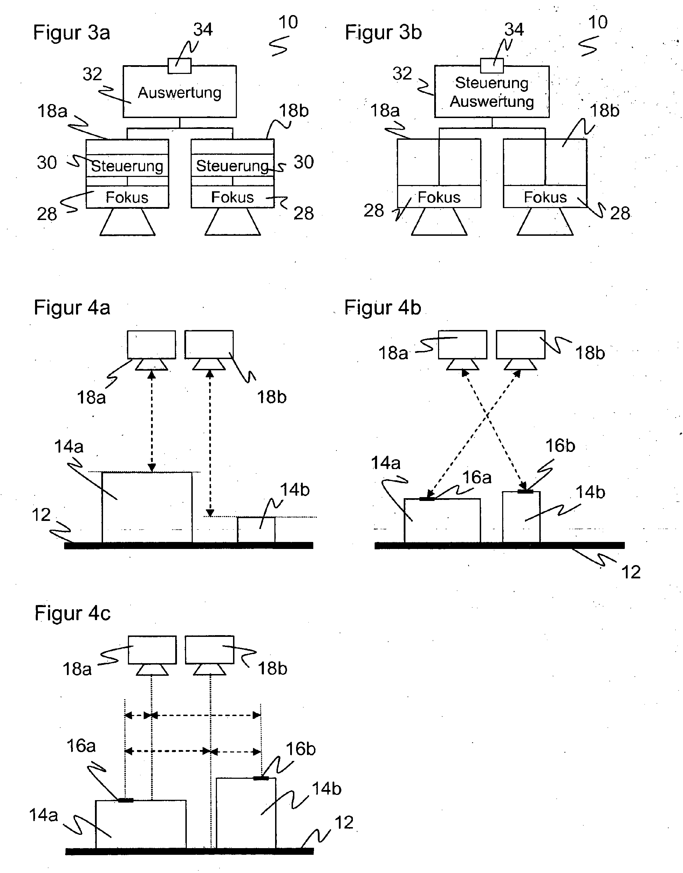

Figur 3 zeigt eine sehr vereinfachte Blockdarstellung des Kamerasystems 10. Jeder Codeleser 18a-b weist eine einstellbare Fokussiereinheit 28 auf, also eine Empfangsoptik mit einer elektronisch verstellbaren Fokuslage. Die Ausführungsform gemäß Figur 3a ist für eine autonome, interne Fokussierungsstrategie ausgelegt. Dazu umfasst jeder Codeleser 18a-b eine eigene Steuerung 30, welche über die jeweils einzunehmende Fokusstellung entscheidet. In der Ausführungsform gemäß Figur 3b dagegen wird die Fokusstrategie zentral in einer gemeinsamen Steuerungs- und Auswertungseinheit 32 koordiniert. Weiterhin sind Mischformen denkbar, in denen sich zunächst die Codeleser 18a-b selbst für eine Fokuslage entscheiden, eine zentrale Steuerung diese Entscheidung aber prüft und gegebenenfalls korrigierend eingreift.

In beiden Ausführungsformen gemäß Figur 3 setzt die Auswertungseinheit 32 die einlaufenden Bilddaten so zusammen, dass jeweils die scharfen Bildbereiche eine gemeinsame Bildzeile bilden. Nach erfolgter Auswertung werden Bilddaten, beispielsweise ein Bild pro Objekt, und weitere Informationen wie Volumen des Objekts, gelesene Codeinformationen und dergleichen über einen Ausgang 34 an eine übergeordnete Steuerung ausgegeben. Soweit erforderlich, werden alle ortsabhängigen Informationen sowie Sensorpositionen in ein gemeinsames Koordinatensystem umgerechnet.

Wenn die Codeleser 18a-b mit unterschiedlicher Fokuslage arbeiten, unterscheidet sich die objektbezogene Auflösung der aufgenommenen Bildzeilen. Denn wie leicht an dem Beispiel der Figur 2 ersichtlich, ist das flache Objekt 14b weiter von dem Codeleser 18b entfernt als das Objekt 14a von dem Codeleser 18a. Eine Bildzeile des Objekts 14b enthält daher weniger Pixel je Objektstruktur, insbesondere Codebereich, als eine Bildzeile des Objekts 14a. Um diesen Unterschied auszugleichen, ist in einer Ausführungsform der Erfindung eine Anpassung der Bildauflösung durch Nachbearbeitung in der Auswertungseinheit 32 vorgesehen. Dabei wird eine gewünschte Auflösung vorgegeben, beispielsweise eine Auflösung, die auch unter der schlechtesten Annahme noch erreicht wird, nämlich hier für den Abstand des Förderbandes 12 selbst. Die Bildzeilen von jedem Codeleser 18a-b werden dann einzeln und mit einem unterschiedlichen Faktor, der von der unterschiedlichen Fokuslage abhängt, auf die gewünschte Auflösung reskaliert. Der Effekt entspricht einem individuellen digitalen Zoom der beiden Codeleser 18a-b. Das Zusammenfügen (Stitching) von solchen Bildzeilen mit gleicher Auflösung ist wesentlich einfacher und führt zu besseren Ergebnissen.

Anhand der Figuren 4a-c, die jeweils skizzenartig einen Schnitt durch die Erfassungsebene der Codeleser 18a-b ähnlich Figur 2 zeigen, wird im Folgenden die interne Fokussierungsstrategie in einer Ausführungsform des Kamerasystems 10 gemäß Figur 3a erläutert. Die Kriterien der vorgestellten Fokussierstrategien werden einzeln beschrieben, können aber auch in Mischformen miteinander kombiniert werden.

Die Geometrien der Objekte 14 sind den Codelesern 18a-b von dem Geometrieerfassungssensor 22 bekannt. Alternativ vermessen die Codeleser 18a-b die Geometrie mit einer internen Abstandsbestimmung selbst. Das führt aber unter Umständen zu störenden Übergangseffekten, da die richtige Fokuslage nicht vorab eingenommen werden kann.

Jeder Codeleser 18a-b ermittelt nun für sich anhand der eingestellten internen Fokussierungsstrategie, welches Objekt 14 zu welchem Zeitpunkt mit welcher Fokuslage fokussiert wird. Solange sich nur jeweils ein Objekt 14 zur gleichen Zeit im Erfassungsbereich 20a-b befindet, kann es nicht zu Konflikten kommen. Sobald aber an einem Förderband 12 Objekte auch in Erfassungsrichtung nebeneinander liegen könnten, sind für die Codeleser 18a-b komplementäre Fokussierstrategien zu wählen. Dies kann durch geeignete Parametrierung oder eine Kommunikation der eigenen Einstellung zwischen den Codelesern 18a geschehen.

Eine einfache komplementäre Strategie orientiert sich an Objektnummern, die den Objekten 14 nach ihrer ersten Erfassung durch den Geometriesensor 22 zugewiesen werden. Die Nummerierung erfolgt zweckmäßigerweise in der Reihenfolge, in der die Objekte 14 in den Erfassungsbereich 20a-b der Codeleser 18a-b eintreten werden. Dann ist beispielsweise der eine Codeleser 18a für gerade Objekte 14 und der andere Codeleser 18a für ungerade Objekte 14 zuständig. Der auf gerade Objekte 14 parametrierte Codeleser 18a schaltet dann auf ein Objekt 14 mit gerader Objektnummer um, wenn es sicher in seinem Erfassungsbereich 20a erkannt wird. Das bedeutet, dass sich die einzelnen Fokuspunkte für das neu zu fokussierende Objekt 14 nur innerhalb der parametrierten Hysterese ändern. Dadurch schaltet der Codeleser 18a vorzeitig seine Fokuslage auf dieses Objekt 14 um, unabhängig ob die Leseaufgabe für das aktuelle Objekt 14 erfüllt ist. Die gleiche Bedingung gilt entsprechend für ungerade Objektnummern.

Eine weitere komplementäre Strategie ist in Figur 4a illustriert und verwendet den parallelen Abstand zwischen Objekt 14a-b und Codeleser 18a-b, welcher wegen der festen Montagehöhe der Codeleser 18a-b durch die Höhe der Objekte 14a-b gegeben ist. Komplementär wird diese Fokussierungsstrategie, wenn ein Codeleser 14a das höchste und der andere Codeleser 14b das flachste Objekt 14a-b fokussiert.

Bei der in Figur 4b illustrierten Fokussierungsstrategie dient der radiale anstelle des parallelen Abstands als Kriterium. Da hier nicht mehr im Allgemeinen mit einer zu dem Codeleser 18a-b gerichteten Fläche gerechnet werden kann, wird zusätzlich noch ein Bezugspunkt auf dem Objekt 14 gewählt. Das kann beispielsweise ein Schwerpunkt der oberen Fläche, eine Objektkante oder eine Objektecke oder, wie in Figur 4b eingezeichnet, die Position eines Codes 16a-b sein. Derartige Bezugspunkte werden auch bei den weiteren noch zu beschreibenden Fokussierstrategien alternativ herangezogen. Das radial nächste Objekt 14a-b und das parallel nächste Objekt 14a-b stimmen häufig, aber nicht immer überein. Wenn die Codeleser 18a-b nahe beieinander montiert sind, wird die Fokussierstrategie komplementär, wenn ein Codeleser 14a das nächste und der andere Codeleser 14b das fernste Objekt 14a-b fokussiert. Bei größerem Abstand zwischen den Codelesern 14a-b kann es stattdessen erforderlich sein, dass beide Codeleser 18a-b das jeweils aus ihrer Sicht nächste Objekt 14a-b wählen und somit die gleiche Strategie verwenden.

In einer nicht dargestellten Ausführungsform wird auf dasjenige Objekt 18a-b fokussiert, welches den kleinsten oder größten Abstand zu einer Fokusvoreinstellung hat. Diese Fokusvoreinstellung ist eine Ruhestellung, in welche die Codeleser 18a-b zurückkehren, wenn kein Objekt 18a-b erfasst wird.

Figur 4c zeigt nochmals eine Variante, welche eine Fokussierstrategie verwenden kann, nämlich den Abstand gegenüber der optischen Achse der Codeleser 18a-b. Dabei kann auf das am weitesten rechts liegende Objekt 14a-b oder das am weitesten links liegende Objekt 14a-b fokussiert werden. Denkbar ist auch, das am zentralsten oder am wenigsten zentral positionierte Objekt 14a-b auszuwählen, d.h. nur den Betrag des Abstands zu der optischen Achse der Codeleser 18a-b zu bewerten.

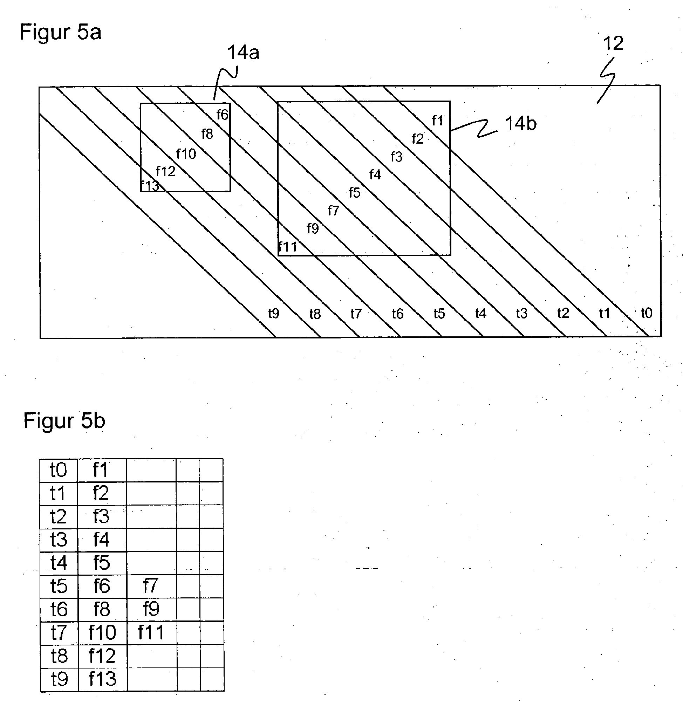

Alternativ zu einer individuellen Fokussierstrategie werden in der Ausführungsform gemäß Figur 3b die benötigten Fokuslagen zentral zugewiesen. Dies wird nun anhand der Figur 5 erläutert. Die zentrale Fokussierstrategie kann aber auch stattdessen oder zusätzlich die soeben beschriebenen Kriterien für die internen Fokussierstrategien verwenden.

Figur 5a zeigt eine schematische Draufsicht auf zwei Objekte 14a-b auf dem Förderband 12. Das Raster der von den Codelesern 18a-b aufgenommenen Bildzeilen wird durch Striche angedeutet. Die Bildzeilen sind schräg zu dem Förderband 12 orientiert. Diese Orientierung spielt keine Rolle, solange das Förderband 12 in voller Breite erfasst ist, und stattdessen ist auch eine senkrechte Orientierung wie in Figur 1 möglich. Den Bildzeilen sind jeweils Zeitpunkte t0 bis t9 zugeordnet. Mit f1 bis f13 wird eine gemäß der Geometrie der Objekte 14a-b einzustellende Fokuslage bezeichnet.

Figur 5b stellt eine aus den Zeitpunkten gemäß Figur 5a abgeleitete Fokustabelle dar. Die Fokuslagen f1 bis f13 und die Fokustabelle wird zentral, beispielsweise in der Steuer- und Auswertungseinheit 32 beziehungsweise einem Fokusmaster auf Basis der Daten des Geometrieerfassungssensors 22 erstellt. Anhand der Fokustabelle verteilt die Steuer- und Auswertungseinheit 32 die Fokussieraufgaben. Solange in einer Zeile nur ein Eintrag steht, bedeutet dies, dass nur ein Objekt 14a-b gleichzeitig erfasst wird. Die Steuer- und Auswertungseinheit 32 kann also einen beliebigen der beiden Codeleser 18a-b auswählen und ihn anweisen, diese Fokuslage einzustellen. Zweckmäßigerweise wechselt diese Zuordnung nicht beständig, sondern der einmal für ein Objekt 14a-b ausgewählte Codeleser 18a-b wird zu einer Nachführung veranlasst. Der andere Codeleser 18a-b kann für die Gewinnung redundanter Daten ebenfalls auf das Objekt fokussiert werden.

Dies gilt für die Zeitpunkte t0 bis t4 und die Fokuslagen f1 bis f5, so dass beispielsweise Codeleser 14a auf Anweisung der Steuer- und Auswerteeinheit 32 auf das Objekt 14b fokussiert und seinen Fokus in den Fokuslagen f1 bis f5 nachführt. Sobald zum Zeitpunkt t5 beide Objekte 14a-b gleichzeitig erfasst werden, demnach die Zeile zu t5 in der Fokustabelle zwei Einträge umfasst, wird der andere Codeleser 14b angewiesen, das zweite Objekt 14a mit der Fokuslage f6 zu fokussieren, während der bisher auf das Objekt 14b fokussierte Codeleser 14a die Fokusnachführung auf diesem Objekt 14b mit der Fokuslage f7 fortsetzt. Ab dem nächsten Zeitpunkt t6 führen beide Codeleser 14a-b die Fokussierung auf dem zugewiesenen Objekt 14a-b mit den Fokuslagen f8, f9 nach. Zum Zeitpunkt t8 kann der auf das Objekt 14b fokussierte Codeleser 18a in eine Fokusvoreinstellung übergehen und stünde ab dann für ein neues Objekt 14 zur Verfügung oder wird zur redundanten Bilderfassung auf das andere Objekte 14a fokussiert. Das Objekt 14b kann nun aus der Fokusliste gelöscht werden. Entsprechendes gilt für den Codeleser 18b und Objekt 14a nach dem Zeitpunkt t9.

Die aktuell eingestellte Fokuslage wird immer durch den ältesten Eintrag in der Fokustabelle bestimmt. Die Fokuslage wird für das gerade aktive Objekt 14 schnellstmöglich eingestellt und fortlaufend aktualisiert, wenn sich aufgrund der Geometrieerfassung Änderungen ergeben. Befinden sich mehrere Objekte 14a-b in dem Erfassungsbereich 20a-b, so wird die Fokussierung der einzelnen Codeleser 18a-b durch den Foküsmaster vorgegeben. Die Objektfreigabe kann durch Lesen des Codes 16 auf dem Objekt 14, also durch Erfüllen der Lesebedingung, durch den Codeleser 18a-b selbst nachdem das Objekt 14 den Erfassungsbereich 20a-b verlassen hat, oder durch Erreichen eines definierten Fokusreleasepunktes erfolgen.

Solange das aktive Objekt noch nicht im Sichtbereich ist, können die Codeleser 18a-b in der Fokusvoreinstellung bleiben. Die Fokusvoreinstellung ist vorzugsweise parametrierbar und wird beispielsweise auf einen Wert gesetzt, der den Tiefenschärfebereich optimal ausnutzt, etwa so, dass der Lesebereich gerade auf Höhe des Förderbandes 12 endet. Mit Eintritt eines Objekts in den Erfassungsbereich 20a-b der Codeleser 18a-b werden dann die Abstandswerte gemäß den Geometriedaten oder die daraus abgeleiteten Fokuslagen verwendet, wobei die Übergabe vorgeplant werden kann, um Verzögerungen durch die Umstellung der Fokuslage auszugleichen.

Umgekehrt wird bei Fokusfreigabe, also wenn das Objekt 14 den Erfassungsbereich 20a-b verlassen hat, erfolgreich gelesen wurde oder der Fokusreleasepunkt erreicht ist, die Fokuslage auf das nächste Objekt 14 in der Liste eingestellt. Sofern die Fokusliste anzeigt, dass derzeit kein Objekt 14 zu erfassen ist, erfolgt eine Rückstellung auf die Fokusvoreinstellung oder einfach eine Beibehaltung der letzten Fokuslage.

Eine scharfe Fokussierung auf alle Objekte 14 kann nur sichergestellt werden, wenn zu keinem Zeitpunkt mehr Objekte gleichzeitig erfasst werden, als Codeleser 18a-b vorhanden sind. Aber auch wenn überzählige Objekte 14 nicht einzeln fokussiert werden können, wird durch die mehreren Fokuslagen die Anzahl nicht scharf erfasster Objekte 14 dennoch reduziert. Außerdem ist denkbar, dass die Fokuslagen sinnvoll genutzt werden, um eine möglichst große Anzahl von Objekten zumindest nahezu scharf zu erfassen. Dazu werden die gleichzeitig erfassten Objekte in so viele Gruppen eingeteilt, wie Codeleser 18a-b vorhanden sind, und diese Gruppenaufteilung erfolgt gerade so, dass mit einer geeigneten Fokuslage zumindest ein Objekt 14 jeder Gruppe ausreichend scharf ist, und wenn möglich auch noch weitere Objekte 14 im jeweiligen Tiefenschärfenbereich oder jedenfalls nicht weit davon beabstandet liegen.

## Patentansprüche

1. Kamerasystem (10), insbesondere kamerabasiertes Codelesesystem, zur Erfassung von Bilddaten eines relativ zu dem Kamerasystem (10) bewegten Stroms von Objekten (14), wobei das Kamerasystem (10) mehrere Erfassungseinheiten (18) mit jeweils einem Bildsensor mit einer Vielzahl von zu einer Pixelzeile oder einer Pixelmatrix angeordneten Lichtempfangselementen und einer Fokussiereinheit (20) sowie mindestens eine Steuerungseinheit (30, 32) aufweist, wobei die Fokuslagen der Erfassungseinheiten (18) von der Steuerungseinheit (30, 32) komplementär einstellbar sind, so dass bei gleichzeitiger Erfassung mehrerer Objekte (14) möglichst viele Objekte (14) von zumindest
einer Erfassungseinheit (18) scharf erfasst sind,
**dadurch gekennzeichnet,**
**dass** eine Auswertungseinheit (32) vorgesehen ist, die dafür ausgebildet ist, die Bilddaten der Erfassungseinheiten (18) zu einem gemeinsamen Bild zusammenzusetzen, indem jeweils scharf erfasste Teile von Bildzeilen der unterschiedlichen Erfassungseinheiten (18) zu einer gemeinsamen Bildzeile zusammengefügt werden.

2. Kamerasystem (10) nach Anspruch 1,
wobei die Erfassungseinheiten (18) derart nebeneinander angeordnet sind, dass ihre Erfassungsbereiche (20) mindestens teilweise überlappen und zusammen die Breite des Stromes von Objekten (14) abdecken.

3. Kamerasystem (10) nach Anspruch 1 oder 2,
wobei die Auswertungseinheit (32) dafür ausgebildet ist, aus den Bilddaten jeweils ein Bild pro Objekt (14) und/oder pro einem an einem Objekt (14) angeordneten Code (16) zu erzeugen.

4. Kamerasystem (10) nach einem der vorhergehenden Ansprüche,
wobei die Erfassungseinheiten (18) separate Kameras sind.

5. Kamerasystem (10) nach einem der Ansprüche 1 bis 3,
wobei mehrere Erfassungseinheiten (18) in einer Kamera zusammengefasst sind.

6. Kamerasystem (10) nach einem der vorhergehenden Ansprüche,
wobei das Kamerasystem (10) mindestens einen Geometrieerfassungssensor (22) aufweist, um vorab eine Kontur des Stromes von Objekten (14) zu erfassen.

7. Kamerasystem (10) nach einem der vorhergehenden Ansprüche,
wobei die Auswertungseinheit (32) dafür ausgebildet ist, Bildzeilen zunächst anhand einer Objektgeometrie eines erfassten Objekts (14) oder der eingestellten Fokuslage auf eine vorgebbare Auflösung umzurechnen und erst dann zu einem gemeinsamen Bild zusammenzusetzen.

8. Kamerasystem (10) nach Anspruch 7,
wobei die vorgebbare Auflösung für Bilddaten aller Erfassungseinheiten (18) die gleiche ist.

9. Kamerasystem (10) nach einem der vorhergehenden Ansprüche,
wobei den Erfassungseinheiten (18) eigene Steuerungseinheiten (30) zugeordnet sind, welche jeweils für eine autonome Fokusstrategie für die Einstellung der Fokuslage ausgebildet sind, wobei die Fokusstrategien untereinander komplementär sind.

10. Kamerasystem (10) nach Anspruch 9,
wobei die komplementären Fokusstrategien anhand mindestens einem der folgenden Kriterien definiert sind: zugewiesene Objektnummer, Höhe des Objekts (14), Abstand zwischen Objekt (14) oder Code (16) und Erfassungseinheit (18), notwendige Fokusverstellung gegenüber einer Fokusvoreinstellung und/oder Abstand zwischen optischer Achse und Objekt (14) oder Code (16).

11. Kamerasystem (10) nach einem der Ansprüche 1 bis 8,
wobei den Erfassungseinheiten (18) eine gemeinsame Steuerungseinheit (32) zugeordnet ist, welche den Erfassungseinheiten (18) jeweils eine Fokuslage zuweist.

12. Verfahren zur Erfassung eines Stromes von Objekten (14) mit mehreren Erfassungseinheiten (18) mit jeweils einem Bild sensor mit einer Vielzahl von zu einer Pixelzeile oder einer Pixelmatrix angeordneten Lichtempfangselementen zur Aufnahme von Bilddaten der Objekte (14), wobei die Fokuslagen der Erfassungseinheiten (18) derart komplementär eingestellt werden, dass bei gleichzeitiger Erfassung mehrerer Objekte (14) in einer Erfassungseinheit (18) möglichst viele Objekte (14) scharf erfasst sind, indem unterschiedliche Erfassungseinheiten (18) ihre Fokuslage auf unterschiedliche Objekte (14) einstellen,
**dadurch gekennzeichnet,**
**dass** Bilddaten der Erfassungseinheiten (18) zu einem gemeinsamen Bild zusammengesetzt werden, indem jeweils scharf erfasste Teile von Bildzeilen der unterschiedlichen Erfassungseinheiten (18) zu einer gemeinsamen Bildzeile zusammengefügt werden.

13. Verfahren nach Anspruch 12,
wobei Bildzeilen zunächst anhand einer zuvor erfassten Objektgeometrie auf eine bezogen auf das erfasste Objekt (14) vorgebbare Auflösung umgerechnet werden, insbesondere für alle Erfassungseinheiten (18) auf die gleiche vorgebbare Auslösung, und erst dann zu einem gemeinsamen Bild zusammengesetzt werden.

14. Verfahren nach Anspruch 12 oder 13,
wobei in den Erfassungseinheiten (18) die jeweilige Fokuslage autonom anhand einander gegenseitig ausschließender Kriterien eingestellt wird.

15. Verfahren nach Anspruch 12 oder 13,
wobei die Fokuslagen anhand der gleichzeitig erfassten Objekte (14) zentral bestimmt und den Erfassungseinheiten (18) vorgegeben werden.

## Claims

1. A camera system (10), especially a camera-based code reading system, for detecting image data of a stream of objects (14) moved relative to the camera system (10), the camera system (10) comprising a plurality of detection units (18) each having an image sensor with a plurality of light reception elements arranged as a pixel row or a pixel matrix and a focusing unit (20) as well as at least one control unit (30, 32), the focal positions of the detection units (18) are set by the control unit (30, 32) in a complementary manner such that on a simultaneous detection of a plurality of objects (14) as many objects (14) as possible are detected in focus by at least one detection unit (18);
**characterized in that**,
an evaluation unit (32) is provided which is configured to compose the image data of the detection units (18) to form a common image, by adding in focus detected parts of image lines of the different detections units (18) to a common image line, respectively.

2. The camera system (10) in accordance with claim 1, wherein the detection units (18) are arranged next to one another such that their detection zones (20) at least partly overlap and together cover the width of the stream of objects (14).

3. The camera system (10) in accordance with claim 1 or 2, the evaluation unit (32) being configured to produce a respective one image per object (14) and/or per code (16) arranged at an object (14) from the image data.

4. The camera system (10) in accordance with any preceding claim,
wherein the detections units (18) are separate cameras.

5. The camera system (10) in accordance with any preceding claim,
wherein a plurality of detection units (18) are combined in a camera.

6. The camera system (10) in accordance with any preceding claim, further comprising at least one geometry detection sensor (22) to detect a contour of the stream of objects (14) in advance.

7. The camera system (10) in accordance with any preceding claim, the evaluation unit (32) being configured first to convert image lines to a predefinable resolution based on the object geometry or on the set focal position and only then to compose them to form a common image.

8. The camera system (10) in accordance with claim 7, wherein the predefinable resolution for image data is the same for all detection units (18).

9. The camera system (10) in accordance with any preceding claim, further comprising separate control units (30) which are associated with the detection units (18) and which are each configured for an autonomous focal strategy for the setting of the focal position, with the focal strategies being complementary to one another.

10. The camera system (10) in accordance with claim 9, wherein the complementary focal strategies are defined based on at least one of the following criteria:
assigned object number,
height of the object (14),
distance between the object (14) or the code (16) and the detection unit (18),
required focal adjustment with respect to a preset focus and/or
distance between the optical axis and the object (14) or the code (16).

11. The camera system (10) in accordance with any of claims 1 to 8, further comprising a common control unit (32) which assigns a respective one focal position to the detection unit (18) and which is associated with the detection units (18).

12. A method for detecting a stream of objects (14) having a plurality of detection units (18) each having an image sensor with a plurality of light reception elements arranged in a pixel row or a pixel matrix for taking image data of the objects (14), the focal positions of the detection units (18) are set in a complementary manner such that on a simultaneous detection of a plurality of objects (14) as many objects (14) as possible are detected in focus, by positioning the focus position of the different detection units (18) on different objects,
**characterized in that**,
image data of the detection units (18) are composed to form a common image, by adding in focus detected parts of image lines of the different detections units (18) to a common image line, respectively.

13. The method in accordance with claim 12,
first converting image lines to a resolution predefinable with respect to the detected object (14) based on a previously detected object geometry; and only then composing image data to form a common image, especially converted to the same predefinable resolution for all detection units (18) and only then composed to a common image.

14. The method in accordance with claim 12 or 13, wherein in the detection units (18) the respective focal position is set autonomously on the basis of mutually exclusive criteria.

15. The method in accordance with claim 12 or 13, wherein the focal positions are determined centrally on the basis of the simultaneously detected objects (14) and preset for the detection units (18).

## Revendications

1. Système à caméra (10), en particulier système lecteur de code basé sur une caméra, pour saisir des données d'images d'un flux d'objets (14) déplacé par rapport au système à caméra (10), dans lequel le système à caméra (10) comprend plusieurs unités de détection (18) comprenant chacune un capteur d'images avec une pluralité d'éléments récepteurs de lumière, agencés pour donner une ligne de pixels ou une matrice de pixels, et une unité de focalisation (20) ainsi qu'au moins une unité de commande (30, 32), dans lequel les situations de focalisation des unités de détection (18) sont réglables de manière complémentaire par l'unité de commande (30, 32), de telle sorte que lors d'une saisie simultanée de plusieurs objets (14), le plus grand nombre possible d'objets (14) sont saisis de manière nette par au moins une unité de détection (18),
**caractérisé en ce que**
il est prévu une unité d'évaluation (32), qui est réalisée pour composer les données d'images des unités de détection (18) pour donner une image commune, en assemblant des parties respectives saisies de manière nette provenant de lignes d'images des différentes unités de détection (18) en donnant une ligne d'image commune.

2. Système à caméra (10) selon la revendication 1,
dans lequel les unités de détection (18) sont agencées les unes à côté des autres de telle façon que leurs zones de détection (20) se chevauchent au moins partiellement et couvrent ensemble la largeur du flux d'objets (14).

3. Système à caméra (10) selon la revendication 1 ou 2,
dans lequel l'unité d'évaluation (32) est réalisée pour engendrer à partir des données d'images respectivement une image pour un objet (14) et/ou pour un code (16) agencé sur un objet (14).

4. Système à caméra (10) selon l'une des revendications précédentes, dans lequel les unités de détection (18) sont des caméras séparées.

5. Système à caméra (10) selon l'une des revendications 1 à 3,
dans lequel plusieurs unités de détection (18) sont regroupées dans une caméra.

6. Système à caméra (10) selon l'une des revendications précédentes,
dans lequel le système à caméra (10) comprend au moins un capteur de détection géométrique (22) afin de détecter au préalable un contour du flux d'objets (14).

7. Système à caméra (10) selon l'une des revendications précédentes,
dans lequel l'unité d'évaluation (32) est réalisée pour recalculer des lignes d'images tout d'abord en se rapportant à une géométrie d'objets d'un objet détecté (14) ou à une situation de focalisation, à une résolution prédéterminée, et pour les recomposer uniquement ensuite pour donner une image commune.

8. Système à caméra (10) selon la revendication 7,
dans lequel la résolution prédéterminée est la même pour les données images de toutes les unités de détection (18).

9. Système à caméra (10) selon l'une des revendications précédentes,
dans lequel des unités de commande propres (30) sont associées aux unités de détection (18), lesdites unités étant réalisées respectivement pour une stratégie de focalisation autonome pour le réglage de la situation de focalisation, lesdites stratégies de focalisation étant complémentaires les unes aux autres.

10. Système à caméra (10) selon la revendication 9,
dans lequel les stratégies de focalisation complémentaires sont définies au moyen de l'un au moins des critères suivants : numéro d'objet attribué, hauteur de l'objet (14), distance entre objet (14) ou code (16) et unité de détection (18), déplacement de focalisation nécessaire par rapport à un préréglage de focalisation et/ou distance entre axe optique et objet (14) ou code (16).

11. Système à caméra (10) selon l'une des revendications 1 à 8,
dans lequel une unité de commande commune (32) est associée aux unités de détection, laquelle attribue aux unités de détection (18) une situation de focalisation respective.

12. Procédé pour détecter un flux d'objets (14) avec plusieurs unités de détection (18) comprenant chacune un capteur d'image avec une pluralité d'éléments récepteurs de lumière agencés pour donner une ligne de pixels ou une matrice de pixels, pour enregistrer des données d'images des objets (14), dans lequel les situations de focalisation des unités de détection (18) sont réglées de manière complémentaire de telle façon que lors d'une détection simultanée de plusieurs objets (14) dans une unité de détection (18), on détecte le plus grand nombre possible d'objets (14) de manière nette, en réglant la situation de focalisation des unités de détection différentes (18) à des objets différents (14),
**caractérisé en ce que**
des données d'images des unités de détection (18) sont regroupées pour donner une image commune, en assemblant des parties détectées respectivement de manière nette dans des lignes d'images des différentes unités de détection (18) pour donner une ligne d'image commune.

13. Procédé selon la revendication 12,
dans lequel des données d'images sont tout d'abord recalculées, au moyen d'une géométrie d'objet préalablement détectée, à une résolution prédéterminée par référence à l'objet détecté (14), en particulier à la même résolution prédéterminée pour toutes les unités de détection (18), et on les recompose seulement ensuite pour donner une image commune.

14. Procédé selon la revendication 12 ou 13,
dans lequel la situation de focalisation respective est réglée dans les unités de détection (18) de manière autonome au moyen de critères qui s'excluent mutuellement.

15. Procédé selon la revendication 12 ou 13,
dans lequel les situations de focalisation sont déterminées de façon centralisée en se rapportant aux objets simultanément détectés (14), et sont imposées aux unités de détection (18).
